# EUROPEAN PATENT APPLICATION

(11) **EP 4 353 802 A1**
(43) Date of publication of application: **17.04.2024**
(21) Application number: 23386096.4
(22) Date of filing: 11.10.2023
(51) Int. Cl.: C10B 53/02, C10L 5/44, C10L 9/08

(54) **METHOD OF THE IMPLEMENTATION IN THE PRODUCTION PROCESS OF THE TECHNOLOGY FOR THE CONVERSION OF SOLID BIOMASS INTO SOLID BIOFUEL PELLETS OR BRIQUETTES**

(30) Priority: 12.10.2022 GR 20220100843
(71) Applicant: Denesakis, Ioannis Anastasios, 21052 Argolida (GR)
(72) Inventor: Denesakis, Ioannis Anastasios, 21052 Argolida (GR)

(57) **Abstract**

Method of continuous and gradually regulated thermal process of conversion of the biochemical with plasticizing and adhesive properties of a solid substance - lignin- contained in the raw material (2) of solid biomass of all kinds and at a rate of approximately 15% to 35% of the specific weight of the raw material (2) in continuous and gradually adjustable liquefied (plasticized) form Fig.1 (14), (19), (15), (2), (20), (3), final creation of continuous and gradually adjustable, given the welding (3) of the raw material (2), applicable to the production process of conversion of of solid biomass of all kinds into solid biofuel pellets - briquettes etc. and system (method application mechanism consisting of Scheme 1 (10), (8), (9), (11), (12), (16), (17 ), (18), (13) integrated internally in the central core of the thermal hearth (10) and parallel to the length protruding from both sides (7), (1) about ten centimeters from the thermal hearth (10, supply system fig.1 (21), (22), (4), (6), (5) with (1), being a connection point with raw material supply silo (2) and point (7 ) being a connection point with the compression chambers of the raw material (2) of the technology of the pellet presses - briquette presses as well as presses of any other shape and volume as a solid biofuel.

## Description

The invention concerns a method applicable to the production process of converting solid biomass of all kinds into solid biofuel in the form of small sphere-type pellets - larger volume briquette type as well as any other shape and volume as solid biofuel and an application system (mechanism) integrated in the technology of solid biofuel production machines, pellet presses - briquette presses as well as presses of any other shape and volume.

Based on the know-how to date of pre-processing and preparation of the raw material solid biomass of all kinds for conversion into solid biofuel, the data are based on the following:
Processing of raw material solid biomass of all kinds in the form of solid microparticles (sawdust) and with a moisture content - within the raw material in the range from 10% up to 18% and with a specific percentage over the specific moisture range depending on the type of solid biomass raw material and the percentage proposed by the manufacturer of the solid biofuel production machines for conversion into pellet type and briquette type as well as any other shape and volume as solid biofuel.

From the specific pre-processing - preparation of the solid biomass raw material of all kinds applicable to the production process of conversion into solid biofuel of pellet type - briquette type etc. through the technology of solid biofuel production machines (pellet presses, briquette presses) the final result obtained as a solid product it is significantly moderate and vulnerable in terms of density - solidity of the body structure of the final product as a solid biofuel with wear and tear being important in the process of packaging, transport, storage as well as the process of burning as a solid biofuel for thermal energy production.

Moreover it is the main reason for the zero utilization to date of most types of solid biomass, especially agricultural biomass, as the compression force, no matter how great, is not sufficient for the conversion into solid biofuel and on which the technology of machines is still based (pellet presses - briquette presses etc.) in combination with the up to now recommended moisture content and only as a preliminary preparation of the raw material for its entry into the compression chambers.

Leading manufacturers of briquette press machine technology have a solid biomass raw material test compression section for those interested to use their solid biomass raw material according to the different species, to certify the quality of the final product as a solid biofuel in terms of density and solidity of the physique as a briquette. This test compression section is an important and necessary factor in the entire process of packaging, transportation, storage, as well as in the burning quality of the solid biofuel without altering, wearing out and disintegrating the body structure of the final product and which wasn't available based on up to date data.

In the technology of pellet press machines, the raw material is enriched with additional moisture in the form of steam just before the raw material enters the compression chambers, essentially increasing the degree of difficulty in the conversion process into a solid pellet-type biofuel as on the one hand it does not function as an adhesive substance and on the other hand it prevents any thermal process of liquefaction - plasticization created by the temperature produced in the contact of the raw material and the compression parts of the biochemical with adhesive properties of a solid substance (lignin)which is containd in the raw material of solid biomass of all of species and which with the data to date is incomplete,uncontrolled and is not completed to the desired degree at the same time as the compression process.

With the addition of the invention to the stage of pre-processing, preparation of the raw material solid biomass and the application in the production process of conversion into solid biofuel in the form of small pellets of a larger volume, briquette type as well as any other shape and volume and the integration into the technology of solid biofuel production machines such as pellet presses, briquette presses as well as presses of any other shape and volume and compared to the data up to now the following are significantly improved:
It significantly improves the density and firmness of the body structure of the final product as a solid biofuel as at the same time as the process of compressing the raw material in the compression chambers of the machines, pellet presses, briquette presses, etc. adhesion data of the biochemistry with adhesive properties of the solid substance (lignin), contained in all types of solid biomass in the liquefied (plasticized) form throughout the range of compressed raw material inside the compression chambers occurred.

With reliable durability as a solid biofuel in the continuity of the process, the packaging, the transportation, the storage as well as the maximum combustion quality as a solid biofuel for the production of thermal energy without changing, wearing out and disintegrating the body structure of the final product as solid biofuel.

A significant increase in the production capacity of pellet presses, briquette presses, as well as presses of any other shape and volume occurred, as the degree of difficulty in the process of compressing the raw material is significantly reduced and the density of the body structure of the final product (specific weight) is significantly increased from 15 % up to approximately 25% depending on the compression force of the machines, pellet presses, briquette presses, etc.

Capability of converting all types of solid biomass either separately by type or with any percentage of mixing of the raw material of all types with each other into solid biofuel.

Significant reduction in production costs as the addition of the invention significantly reduces the degree of difficulty at all levels by reducing the straining of the machines (pellet presses, briquette presses etc.), as a lower horsepower is required for the motors to function throughout the entire operation process compared to the current data.

A significant reduction in the wear and tear of the machines, especially of the matrix and the compression rollers in the pellet presses, as well as in all the important parts inside the compression chambers of the solid biofuels production machines in general, compared to the current data.

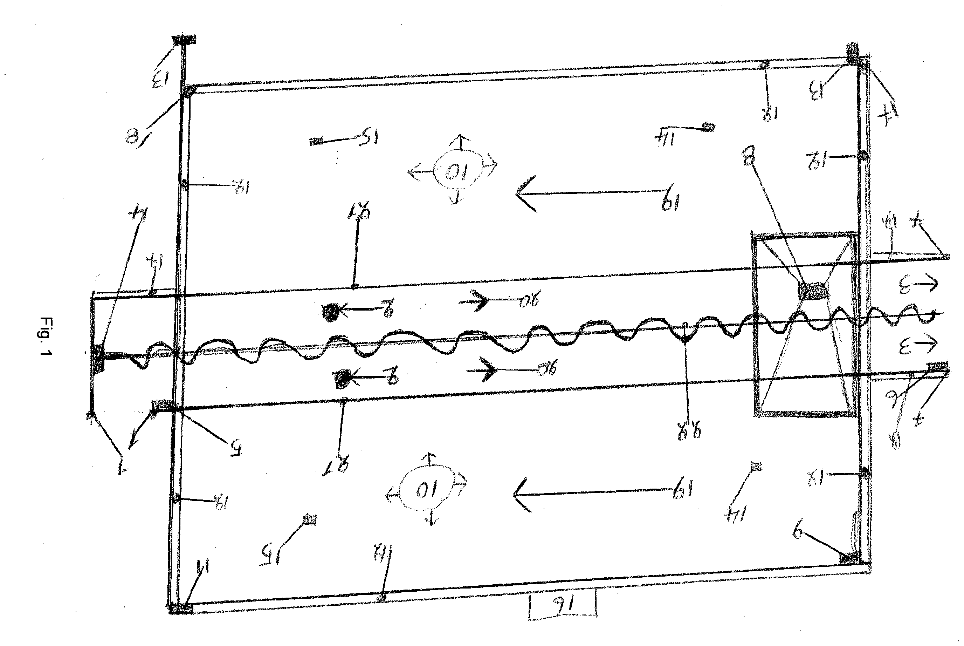

The invention concerns a method of application through a system (mechanism) of creating a continuous and gradually regulated thermal process Fig. 1 (14) (19) (15) - (2) (20) (3) of converting the biochemical with a plasticizing and adhesive properties substance (lignin)contained in the raw material (2) of solid biomass of all kinds and at a rate of approximately 15% to 35% of the specific gravity of the raw material (2) depending on the species, from the initial natural solid form to continuous and gradually adjustable liquefied (plasticized) form with gradual selection of the percentage of liquefaction (plasticization) at which the plasticizing and adhesive properties are developed to the maximum extent creating continuously gradually adjustable welding data (3) Fig. 1 in relation and in dependence to a continuously constant amount of feed with raw material (2) of the application method- system (mechanism).

Applicable as a method (14) (19) (15) - (2) (20) (3) in the production process of converting solid biomass of all kinds into solid biofuel in the form of small balls of pellet type larger volume of briquette type as well as any other shape and volume as a solid biofuel.

The conversion of lignin from a solid form to a liquid (plasticized) form creates a continuous and gradually adjustable welding data (3) throughout the range of raw material (2) entering and then being compressed within the compression chambers of solid biofuel production machines for converting it into solid biofuel by improving to a significant extent and at all stages of the production process the conversion data of the raw material (2) solid biomass of all kinds into solid biofuel to date.

Which is applied through a system consisting of Fig. 1 heat source (10) flame heat source (mechanism) like a combustor (8) temperature measurement sensor (9) thermal insulation (12) exhaust gas outlet point (11) panel (display) data display (16) tilt points (17), (18) support bases (13) with integrated in the central core of the hotplate (10) internally and parallel to the length protruding from both sides FIG (1) (7) approx. 10 cm feed system consisting of a closed tube (21) feed screw (22) variable speed drive (4) moisture measurement sensors (5), (6) connection point side (7) with compression chambers pellet presses - briquette presses etc. and a connection point side (1) with raw material supply silo (2)

Integrated into the technology of solid biofuel production machines pellet presses - briquette presses as well as presses of any other shape and volume as solid biofuel.

The addition of the invention to the manufacturing industry of solid biofuel production machines, pellet presses - briquette presses, etc. will significantly contribute to the provision of a technologically reliable solution to the conversion of solid biomass of all kinds into solid biofuel pellets - briquettes, etc. Moreover adding the data of welding (3) at the same time as the process of compression of the raw material (2) inside the compression chambers of the pellet press machines - presses briquettes etc. to the one and only until today data of the compression force of the raw material (2) and which welding data the invention creates throughout the range of the raw material before entering the compression chambers and is continuously completed at the same time as the compression process as a welding of the entire range of compressed raw material (2) and conversion into solid biofuel significantly improving the production process, opening new horizons even in manufacturing philosophy of machines in the future from the manufacturing industry of briquetting - pelletizing machines of raw material (2) solid biomass of all kinds, pellet presses - briquette presses etc.

The moisture content of the processed raw material (natural water) is suggested from 0% to 15% for filling the storage and supply silo and with any percentage over the specific range within the solid biomass raw material of all kinds.

The whole system (mechanism) Fig. 1 (10) (8) (9) (12) (11) (16) - (17) (18) (13) - (21) (22) (4) (5) ) (6) - (1) (7) application of the method of continuous and gradually regulated thermal (14) (19) (15) process (2) (20) (3) and at the same time continuous and gradually regulated liquefaction (plasticization) of biochemical with plasticizing and adhesive properties of a solid substance - lignin - contained in the raw material of solid biomass of all kinds and to the extent that the adhesive properties are fully developed.

It is connected from the side (1) of input of the raw material (2) to the supply and feeding silo and the side (7) of output of the raw material (2) to the compression chambers of the machines pellet presses - briquette presses and presses of any other shape and volume as a solid biofuel.

On the side (7) of connection with the compression chambers of the machines and on the edge of the thermal hearth (10) laterally and externally, a thermal flame source mechanism (burner-type mechanism) (8) is placed with temperature input (14) in continuous operation conditions up to 600 degrees Celsius while on the side (1) of connection with the raw material supply silo (2) on the edge of the thermal hearth (10) in the upper part exhaust gas outlet pipe (11) from the thermal hearth (10).

The whole system (mechanism) Fig. 1 (10) (8) (9) (12) (11) (16) - (17) (18) (13) - (21) (22) (4) (5) ) (6) - (1) (7) applying the method (14) (19) (15) - (2) (20) (3) is constructed connect and operate with an upward slope from side (7) slope (17) 0 % to side (1) slope (18) 5% to 8% approximatelly.

From the side (1) of connection with the supply silo within the supply system of mechanism Fig. 1 (21), (22), (4), (5), (6) and in contact with the raw material (2) is placed a sensor (5) for measuring incoming humidity of the raw material (2) and the indicator data are transferred to a central digital indicator panel (16).

From the side (7) connecting the whole system to the compression chambers at the outlet of the raw material (2) and inside the feeding system (mechanism) (21), (22), (5), (6), (4) ) in contact with the outgoing raw material (2), a moisture measurement sensor (6) is placed and the reading data is transferred to the central digital display panel (16).

Inside the thermal hearth (10) from the side (7) of the heat source of the flame (burner type mechanism-combustor) (8) a sensor (9) is placed to measure the temperature (14) continuously in maximum range based on the selection inside the thermal hearth (10 ) and the measurement data is transferred to the central digital display panel (16).

In the entire construction of the thermal hearth (10) around the perimeter and on the outside, heat insulation (12) of high resistance is placed in continuous operation of 650 degrees Celsius.

The method (14) (19) (15) - (2) (20) (3) of continuous and gradually adjustable thermal process of creating continuous and gradually adjustable liquefaction (plasticization) and final creation of continuous and gradually adjustable given welding (3) of the biochemistry with adhesive properties of a solid substance - lignin - containing in the raw material (2) of solid biomass with a gradual selection of the percentage works as follows.

Ignition of the flame heat source (burner type mechanism-combustor-) (8) in thermal hearth(10) and creating a temperature (14) continuously maximum based on the selection inside thermal hearth (10) of about 300 degrees Celsius which then fluctuates accordingly to the desired rate of liquefaction (plasticization) and the creation of continuously and gradually adjustable given adhesion (3) of the raw material- lignin (2).

Input of the raw material (2) from the supply silo into the feed system (mechanism) (21), (22), (5), (6), (4) in which the thermal hearth (10) is integrated, destined for the exit from the entire system side (7) to the compression chambers of the pellet presses - briquette presses as well as presses of any other shape and volume.

When the raw material (2) enters the thermal hearth (10) through the feeding system (mechanism) (21), (22), (5), (6), (4), the first stage of the thermal ( 14) (19) (15) - (2) (20) (3) process (2) (20) (3) of continuous and gradually regulated liquefaction (plasticization) and creation of continuous and gradually regulated given welding (3) of solid biochemistry substance - lignin - which is initially converted to fluid state from the temperature (15) constantly minimal in relation to the maximum that comes into contact with the raw material (2) inside the heat source (10) and which raw material (2) is in the opposite course (20) of collision with the course (19) of the temperature (14) continuously maximum based on the selection inside the thermal hearth (10) as the heat source (8) is located at the outlet of the raw material (2) side (7) and with an upward slope (18) About 5% to 8% of the thermal hearth (10) and the whole system towards the side (1) of the input of the raw material (2) with the result that the maximum selected temperature (14) is continuously generated from the side (7) of the heat source (8) and the outlet of the raw material (2) with a simultaneous continuous course (19) of the temperature (14) continuously maximum based on the selection inside the thermal hearth (10) towards the side (1) of input of the raw material (2) and connection with the supply silo and continuous absorption of the temperature (15) constantly minimum in relation to the maximum from the incoming raw material (2) creating continuously the data of the maximum based on the temperature selection (14) on the side (7) and the continuous minimum in relation to the maximum temperature (15) on the side (1) inside the thermal hearth (10).

As the raw material (2) continues its journey (20) towards the outlet side (7) of the entire system, it encounters a higher and higher gradual temperature (14) (19) (15) and with the maximum (14) continuously based on the selection at the exit (7) from the heat hearth (10) and to the extent selected through the heat source of the flame (8) having at the maximum based on the selection continuous and gradually adjustable liquefaction (plasticization) and creation of continuous and gradually adjustable data of welding (3) in relation to the constant supply quantity of the raw material (2) and in relation to the required temperature (14) (19) (15) for this purpose.

By increasing and decreasing the temperature (14) constantly maximum based on the selection inside the thermal hearth (10) the rate of liquefaction (plasticization) of - lignin - fluctuates simultaneously, which rate starts from approximately 70 degrees Celsius of the raw material (2 ) where it initially turns into a liquid state and following the gradual increase in temperature (14) (19) (15) it gradually turns into a fully liquid (plasticizing) state at about 220 degrees Celsius.

With a gradual decrease in temperature (14), (15) the rate of liquefaction (plasticization) and creation of a continuous and gradually adjustable given welding (3) of the raw material (2) is also gradually reduced and when the temperature (14) (15 ) return to standardized levels the lignin - returns to the original natural solid form within the raw material (2) solid biomass of all species.

Based on the above data, the choice of the percentage of continuous and gradually adjustable liquefaction (plasticization) and creation of continuous and gradually adjustable given welding (3) is in direct relation and dependence with the gradual choice of temperature (14) continuously maximum based on selection within the thermal hearth (10) and in relation to and dependence on the constant supply quantity of the raw material (2) from the silo through the mechanism feed system (21) (22) (5) (6) (4) - ( 1) (7) to the whole system of application of the method (14) (19) (15) - (2) (20) (3) continuous and stepwise adjustable liquefaction (plasticization) and creation of continuous and stepwise adjustable given welding (3) of raw material lignin (2)

And from which relationships and dependencies depends the time the raw material (2) stays inside the system in continuous feed flow mode from the moment of entry side (1) of the raw material (2) into the system of continuous and gradually adjustable liquefaction (plasticization) etc. creating a continuous and gradually adjustable welding data (3) until the moment of side exit (7) and side connection (7) with the compression chambers of the pellet presses - briquette presses etc.

The construction materials of the entire heating system (10), (11), (8), (9), (12) and supply system (mechanism) (21), (22), (5), (6) , (4) are required to have a temperature resistance of at least 650 degrees Celsius of continuous operation of the entire system.

The percentage of continuous and gradually regulated liquefaction (plasticization) of - lignin - is calculated on the total percentage of- lignin - contained in the solid biomass raw material depending on the species. If the raw material contains 30% - lignin - on the total specific weight of the raw material (2) the percentage of continuous and gradually adjustable liquefaction (plasticization) and creation of continuous and gradually adjustable given welding (3) based on the reading of the sensor (6) for measuring humidity located on the outlet side (7) of the raw material ( 2) from the whole system starting from 1% to 30% and in which the liquefaction (plasticization) of - lignin is 100% complete.

The selection of the degree of application of the method (14) (19) (15) - (2) (20) (3) of continuous and gradually adjustable liquefaction (plasticization) and creation of continuous and gradually adjustable given welding (3) of - lignin - in which the plasticizing adhesive properties have been completed to the maximum extent depends on the visual and tactile control of the final product in terms of the solidity of the body structure.

From the reading of the sensor (6) for measuring humidity on the side (7) of the outlet of the raw material (2), the percentage of the reading of the sensor (5) on the side (1) of the inlet of the raw material (2) is subtracted as it is integrated with that of output side (7) and the remaining percentage is the actual percentage of continuous and stepwise adjustable liquefaction (plasticization) and creation of continuous and stepwise adjustable given welding (3) of raw material lignin (2) solid biomass of all kinds.

The construction scale of the entire system (mechanism) of application Fig. 1 (10) (8) (9) (12) (11) (16) - (17) (18) (13) and the built-in power supply system (mechanism) (21), (22), (5), (6), (4) - (1) (7) depends on the production capacity of the machines that the whole system integrates.

With approximately one meter length and up to thirty centimeters diameter width - height and with internal diameter of the power supply system (mechanism) (21), (22), (5), (6), (4) - (1) (7 ) up to nine centimeters (Φ90) for production capacity of gradual liquefaction (plasticization) and creation of continuous and gradually adjustable given welding - of lignin up to forty kg / hour of raw material (2) solid biomass of all kinds.

43. And up to six meters in length with a diameter of a thermal hearth (10) approximately fifty centimeters in width - height and up to fourteen centimeters in the internal diameter of the mechanism feeding system (21) (22) (5) (6) (4) - (1) ( 7) (Φ140) for quantities of continuous and gradually adjustable plasticizing liquefaction and creation of continuous and gradually adjustable given welding (3) up to five hundred kg/hour of raw material (2).

## Claims

1. Method applicable through a system (mechanism) in the production process of converting the raw material (2) solid biomass of all kinds into solid biofuel pellets-briquettes etc. **characterized by** the fact that it creates a continuous and gradually regulated thermal - biochemical conversion process with adhesive properties of a solid substance - lignin - with adhesive properties, contained in the raw material (2) in continuous and gradually adjustable liquefied (plasticized) form.
**Characterized by** the fact that it is implemented through an application system (mechanism) consisting of a thermal hearth (10)
- Heat source (burner(combustor) type mechanism) (8)
- Temperature measurement sensor (9)
- Thermal insulation (12) exhaust gas outlet (11)
- Data display panel (16)
- Support bases (13) tilt points (17) (18)
With integrated in the central core of the thermal hearth (10) internally and parallel to the length protruding from both sides (1) (7) of the thermal hearth (10) about ten centimeters feeding system (mechanism) consisting of a closed type tube (21) feed screw (22) raw material supply (2) variable speed supply mechanism (4) moisture measurement sensor (5) incoming raw material (2) moisture measurement sensor (6) outgoing raw material (2) -side (1) connection point and raw material inlet (2) - side (7) connection point and raw material outlet (2).
**Characterized by** the fact that as a method it is applied based on the creation of - a continuous maximum based on the selection of temperature (14) side (7) - a continuous course (19) of temperature (14) creation of a continuous minimum in relation to the maximum temperature (15) side ( 1) inside the thermal hearth (10).
With simultaneous continuous constant supply of raw material (2) side (1) of continuous course (20) of raw material (2) within the feeding system (mechanism) and the thermal hearth (10) for the final creation of continuous and gradually adjustable liquefaction (plasticization) - lignin - raw material (2) creation continuously and rhythmically adjustable given the welding (3) of - lignin - raw material (2) on the side (7) point of connection and exit of the raw material (2).

2. According to claim (1) the method and the application system is **characterized by** the fact that the entire system (mechanism) for applying the method is manufactured, connected and operated applying the method with an upward slope from side (7) slope (17) 0% to side (1) ) slope (18) 5% to 8% approx.

3. According to claims (1) (2) application method and system (mechanism) **characterized by** the fact that the side (7) is connected to the compression chambers of the raw material (2) of the machines of the technology pellet presses - briquette presses as well as presses of any kind of a different shape and volume as solid biofuel and the side (1) with the material supply silo (2).

4. According to claims (1), (2), (3) application method and system (mechanism) **characterized by** the fact that the heat source of the flame (8) (burner type mechanism) is placed externally on the edge and side of the heat source (10 ) on the side (7) with the temperature entering the thermal hearth (10).

5. According to claims (1), (2), (3), (4), method and application system **characterized in that** the data of the maximum temperature (14) based on the selection is continuously created on the side (7) of the outlet of the raw material (2) and the minimum in relation to the maximum temperature (15) on the side (1) of the entry of the raw material (2) into the thermal hearth (10).

6. According to claims (1), (2), (3), (4), (5), application method and system **characterized in that** the course (20) of the raw material (2) is opposite and in a continuous gradual thermal collision with the course (19) of the temperature (14), (15) within the thermal hearth (10) which thermal collision is continuously completed on the side (7) of the output of the raw material (2) having the maximum based on the option of creating a continuous and stepwise adjustable welding data (3) of the raw material (2) in relation and dependence with a constant supply of raw material (2) and the required temperature (14), (15) inside the thermal hearth (1).

7. According to claims (1), (2), (3), (4), (5), (6) method and system (mechanism) of application **characterized by** the fact that by fluctuating the temperature (14) inside the thermal hearth ( 10)and keep constant the amount of supply of raw material (2)is simultaneously fluctuates the data of the percentage of continuous and gradually adjustable (plasticization) and creation of continuous and gradually adjustable given welding (3) of - Lignin - raw material (2) and with a constant based on the temperature selection (14) inside the heating hearth (10) and fluctuation of the amount of supply of raw material (2) the rate of continuous and gradually adjustable liquefaction (plasticization) and creation of a continuous and gradually adjustable welding data of - Lignin - raw material (2) is simultaneously increased and decreased (3).

8. According to claims (1), (2), (3), (4), (5), (6), (7), method and system (mechanism) of application **characterized by** the fact that the range of the rate of continuous and gradual adjustable liquefaction (plasticization) and creation of a continuous and gradually adjustable given welding (3) of - Lignin - raw material (2) solid biomass of all kinds is directly related and dependent on the range of quantity of - Lignin - contained in the raw material ( 2) on its total specific gravity.

9. According to claims (1), (2), (3), (4), (5), (6), (7), (8) application method and system (mechanism) **characterized by** the fact that the application scale of method and construction of the system (mechanism) is adapted to the hourly production capacity of the pellet presses - briquette presses, etc. and the required hourly amount of raw material (2) to create a continuous and gradually adjustable welding data (3).
